Europäisches Patentamt

European Patent Office

Office européen des brevets

(11) Publication number: **0 018 762**
**B1**

# EUROPEAN PATENT SPECIFICATION

(45) Date of publication of patent specification: **24.11.82**

(51) Int. Cl.³: **H 04 N 1/40, B 41 J 3/20**

(21) Application number: **80301281.4**

(22) Date of filing: **21.04.80**

(54) **Thermal printing apparatus.**

| | |
|---|---|
| (30) Priority: **24.04.79 JP 49787/79**<br>**24.04.79 JP 49788/79** | (73) Proprietor: **Oki Electric Industry Company, Limited**<br>**7-12, Toranomon 1-chome Minato-ku**<br>**Tokyo (JP)** |
| (43) Date of publication of application:<br>**12.11.80 Bulletin 80/23** | (72) Inventor: **Ishibashi, Norio**<br>**7-12, Toranomon 1-chome Minato-ku**<br>**Tokyo (JP)**<br>Inventor: **Nakano, Kazuo**<br>**7-12, Toranomon 1-chome Minato-ku**<br>**Tokyo (JP)** |
| (45) Publication of the grant of the patent:<br>**24.11.82 Bulletin 82/47** | |
| (84) Designated Contracting States:<br>**DE FR GB IT NL SE** | (74) Representative: **Abbott, Leonard Charles et al,**<br>**GILL JENNINGS & EVERY 53/64 Chancery Lane**<br>**London WC2A 1HN (GB)** |
| (56) References cited:<br>**DE - B - 1 548 792**<br>**FR - A - 2 343 602**<br>**NL - A - 7 905 572**<br>**US - A - 4 074 320**<br>**US - A - 4 113 391** | |

Courier Press, Leamington Spa, England.

Thermal printing apparatus

This invention relates to thermal printing apparatus.

Thermal printing systems utilise a thermal head having a series of aligned heat-generating resistor elements. An electric current is fed to each of the heat-generating resistor elements in accordance with the black or white information of a picture cell to be recorded, so that the Joule heat thus generated in the resistor elements is transferred to a heat-sensitive treated thermal paper which is in close contact with the thermal head. Such a heat-sensitive printing system has been used, for example, in facsimile receivers and in computer terminal devices. An example of the thermal head and the apparatus for supplying the electric power thereto has been shown in U.S. Patent No. 3,609,294.

Heat-sensitive colour formation theoretically requires a comparatively long time (about 1.5 to 10 mS) for recording, so that, when high-speed printing is required a simultaneous multi-dot recording system which simultaneously records a plurality of dots is used.

Printing by a thermal printing head is carried out by the dot matrix process which generates the desired pattern by heating thermal head elements selectively in synchronism with the paper transfer. The information for selecting particular thermal elements for each desired pattern is usually stored in an integrated circuit (IC) memory.

The concentration or the colour density of a thermal paper depends upon many factors, among which the electric power applied to the thermal elements and the temperature of the thermal paper just before the paper is heated are the most important factors. That is to say, when the temperature of the thermal paper is low, high power must be applied to a thermal element to obtain the desired density, whilst when the temperature of the paper is high, a smaller amount of power is sufficient to provide the desired concentration.

In a particular example, a thermal element is heated by an electric pulse having the predetermined amplitude and a pulse duration of 1.5 milliseconds to provide the desired density of colour change of a thermal paper. The heated thermal element and the heated portion of the thermal paper return to the normal temperature after 10 milliseconds from the time of heating. That 10 mS duration is called a heat storage duration. Therefore, the period for heating a thermal element must be longer than the heat storage duration. If a thermal element is reheated within the heat storage duration, the colour change would be too dark. Accordingly, a prior thermal printing system makes the period of heating thermal elements longer than the heat storage duration in order to provide the desired colour density.

However, that prior thermal printing system has the disadvantage that the printing speed is rather slow, since the period for heating the thermal elements is long. Thus, a high-speed printer which can print a line in the period of 1.5 to 2.0 milliseconds has been almost impossible.

Furthermore, when a printer is utilised as a facsimile receiver, which uses information compression for high speed transmission, the printing speed must be variable depending upon the rate of receiving the information, and when the reception rate exceeds the printing speed of the receiver, the information cannot be printed.

U.S. Patent No. 4 113 391 discloses a thermal printing apparatus of the type comprising a plurality of single dot printing thermal elements each having a heater and being aligned in a straight line perpendicular to the direction of movement of a thermal paper. A corresponding plurality of switching means is respectively connected in series with the heaters and a power supply supplies electric power to the heaters via the respective switching means. Control means is provided for controlling the switching means to supply pulses of electric power to the heaters selectively, and for selecting the durations of the pulses of electric power, the control means comprising a first digital memory which stores black/white printing information for each thermal element.

In that thermal printing apparatus, the durations of the power pulses fed to the heaters of the thermal elements are selected in accordance with the general ambient temperature of the printing heat, and in accordance with the applied power supply voltage. However, when an element is to be energised no account is taken of whether the temperature of that element is already high because it has been operated recently.

It is an object of the present invention to provide an improved thermal printing apparatus.

According to the present invention, a thermal printing apparatus of the above-mentioned type is characterised in that the control means further comprises a second digital memory which stores, for each heater, information relating to the previous energisation state of the respective heater; conversion means for converting the output of the second digital memory to a trigger timing pulse for initiating the heating of each thermal element; and AND circuit means for providing the logical product of the trigger timing pulse and the output of the first digital memory to fire each thermal element as required, whereby the control means operates in response to the stored information relating to the previous energisation state of each respective heater to control the duration of each pulse of electric power as a function of that stored information.

The content of the second digital memory may relate to the status (black/white) of the several previously-printed dots. Alternatively, the content of the second digital memory may relate to the

**0018762**

duration between the time that the last black dot was printed by the particular thermal element and the present time.

Embodiments of the invention will now be described, by way of example, with reference to the accompanying drawings, in which:

Fig. 1 is a block diagram of one form of thermal printing apparatus according to the invention,

Fig. 2 is a timing chart for the apparatus of Fig. 1,

Fig. 3 is a block diagram of another form of thermal printing apparatus according to the invention,

Fig. 4 is a timing chart for the apparatus of Fig. 3,

Fig. 5 is a block diagram of a modification of the apparatus of Fig. 3, and

Figs. 6A and 6B are explanatory drawings of the theoretical principle of the present invention.

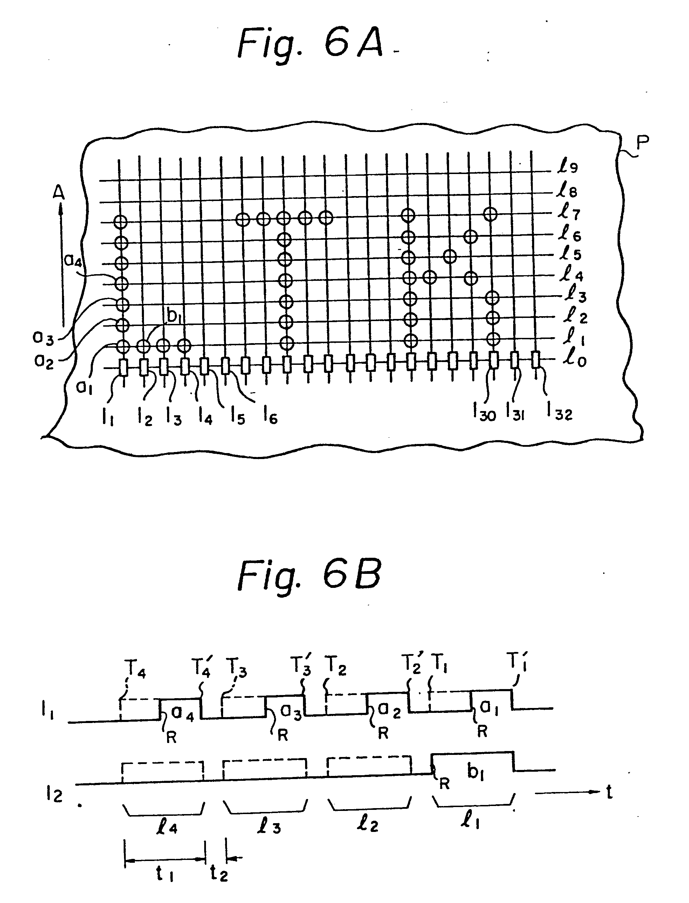

The theoretical principle of the present invention will first be explained, with reference to Figs. 6A and 6B of the drawings, for the easy understanding of the present invention.

In Fig. 6A, a plurality of thermal elements $1_1$ to $1_{32}$ are aligned on a straight line $l_0$ in contact with a thermal paper P, which moves in a direction A perpendicular to the line $l_0$. The line $l_0$ is now being printed. The line $l_1$ was printed one cycle earlier, and the line $l_2$ was printed two cycles earlier. It should be noted that a desired pattern can be printed by appropriately selecting thermal elements and heating them at each printing line $l_9$—$l_0$. This printing process is called the dot matrix printing.

Fig. 6B shows the waveform of power pulses (HV) applied to the first two thermal elements $1_1$ and $1_2$. Each power pulse HV has a pulse width $t_1$ of approximately 1.5 mS for providing sufficient darkness, and the duration $t_2$ between the end of the preceding power pulse and the leading edge of the present power pulse is assumed to be shorter than 10 mS. If the duration $t_2$ is longer than 10 mS, a printed dot heated by a thermal element is cooled sufficiently, and so the next power pulse must have the full pulse width (1.5 mS). However, if that duration is shorter than 10 mS, the previously printed dot is not cooled enough before the next printing, so the power pulse must be weakened to provide the desired colour density. If the power pulse were always constant in spite of the changes in printing duration, the printed density would be too dark and the quality of the printing would deteriorate. In Fig. 6B, the thermal element $1_1$ prints the dark dots ($a_4$, $a_3$, $a_2$, $a_1$, etc.) continuously, whilst the thermal element $1_2$ prints the dot $b_1$ after a long pause. On lines $l_4$, $l_3$ and $l_2$, the pulse width applied to the thermal element $1_1$ is shortened, while the thermal element $1_2$ is not energised, as shown in Fig. 6B. On the line $l_1$, the power pulse ($a_1$) applied to the thermal element $1_1$ is also shortened, but the power pulse ($b_1$) applied to the thermal element $1_2$ has the full pulse width.

The control of the pulse width is carried out by delaying the rising point R of each power pulse from the reference leading edge ($T_4$, $T_3$, $T_3$, $T_2$, $T_1$). The trailing edge ($T_4'$, $T_3'$, $T_2'$, $T_1'$) is not changed in spite of the change of the pulse width.

From the foregoing, it should be appreciated that the pulse width of a power pulse applied to a thermal element is controlled according to a previously-printed dot, and that control is performed by adjusting the rising point R of a power pulse.

The present invention is also applicable to a series printer in which a thermal head has seven elements corresponding to $l_1$—$l_7$ and the head moves horizontally, whereas the head in Fig. 6A is fixed and the paper is transferred vertically.

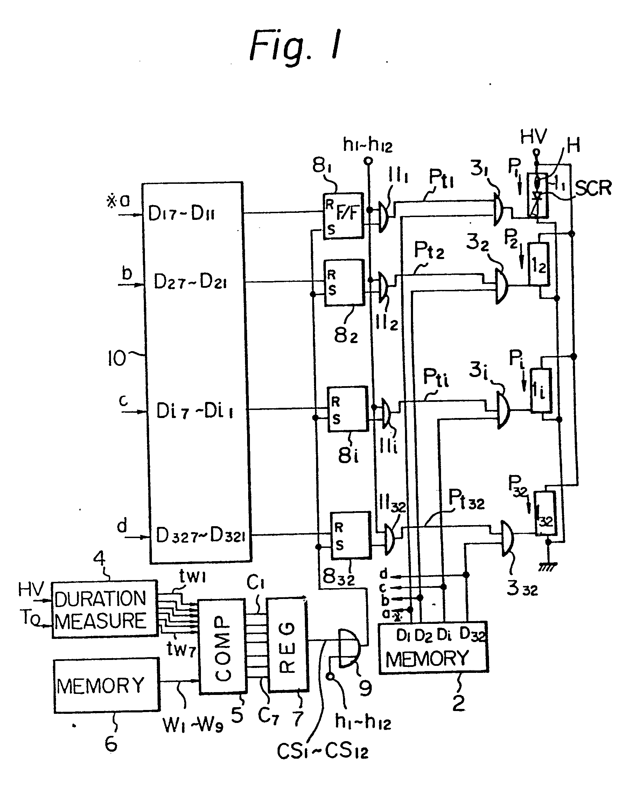

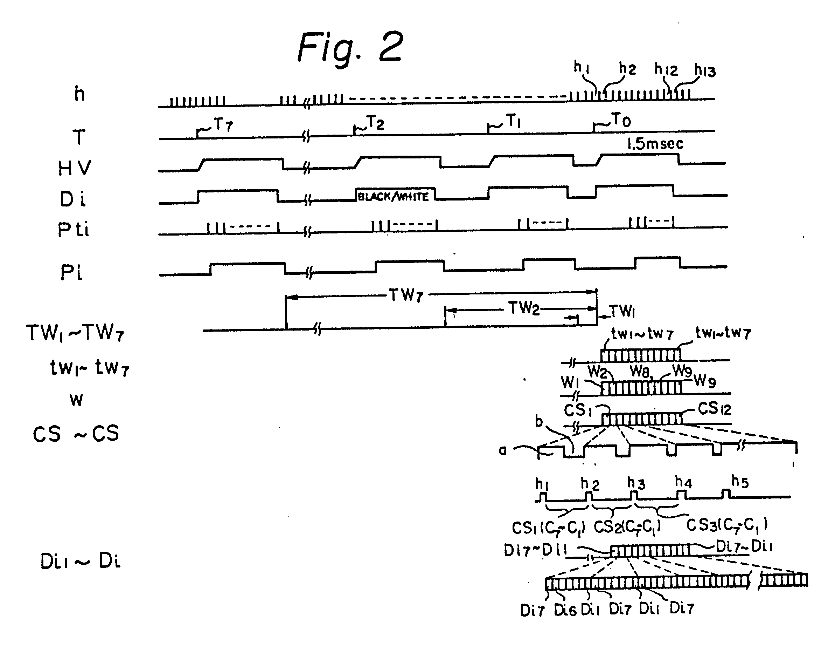

Fig. 1 is a block diagram of a first embodiment of the present invention and Fig. 2 is a timing chart of the apparatus of Fig. 1. In Fig. 1, each of the thermal elements $1_1$ to $1_{32}$ has a heater H and a thyristor SCR connected in series therewith. One end of each heater H is connected to a power terminal HV which applies power pulses of the predetermined amplitude and the predetermined pulse width to the heater H. The other end of the heater H is connected to the anode of the thyristor SCR, the cathode of which is grounded. It will, therefore, be appreciated that when the thyristor is conductive, electric current flows from the power terminal through the heater H and the thyristor SCR to ground, and the heater H is heated. The thermal elements $1_1$ to $1_{32}$ are aligned along a straight line for dot matrix printing, and by selectively heating some thermal elements and moving a thermal paper at a predetermined speed in the direction perpendicular to the line of thermal elements, the desired pattern is printed on the paper.

Each thermal element is designed so that the desired colour density is obtained by heating the element for 1.5 millisecond with the predetermined power source from the power terminal HV, and the temperature of the element returns to the normal level in 10 milliseconds. Accordingly, the printing period is longer than 1.5 milliseconds. Also, if the particular thermal element is not heated for seven lines (when more than seven successive lines are white), the duration for heating that element is longer than 10 milliseconds ($1.5 \times 7 = 10.5 > 10$).

A digital memory 2 stores the desired pattern for printing, and the memory 2 applies digital information (1 or 0) to the thermal elements. Of course, the digital signal "1" heats the element to print black, and the digital signal "0" does not heat the element thereby keeping the paper white. The memory 2 has 32 outputs $D_1$ to $D_{32}$ corresponding to the thermal elements. The outputs $D_1$ to $D_{32}$ are connected to the gates of the corresponding thyristors SCR of the thermal elements via corresponding AND circuits $3_1$ to $3_{32}$. The AND circuits $3_1$ to $3_{32}$ receive trigger signals $P_{t1}$—$P_{t32}$ from other AND circuits $11_1$ to $11_2$.

Referring now to Fig. 2, a printing control clock pulse h has a period of 125 $\mu$S. The symbol T

3

shows the power pulse start timing, in which $T_0$ is the start timing of the present line $I_0$, $T_1$ is the start timing of the previous line $I_1$, and $T_7$ is the start timing of the line $I_7$ which was printed seven cycles earlier. The power pulse HV is started by the start signal $T_i$ and continues for 12 clock periods of the clock pulse h. Hence, the duration of the power pulse HV is 1.5 milliseconds ($=125 \mu S \times 12$). Printing information $D_i$ is stored in the digital memory 2 just before the printing start signal $T_i$ occurs, and can be read out from the memory during the 12 clock periods h. The start signal $T_i$ also causes the paper to be fed by one line. The line $D_i$ in Fig. 2 represents the information read out of the memory 2 for the i'th thermal element $I_i$.

$P_{ti}$ in Fig. 2 shows a trigger signal which is provided at the output of the AND circuit $11_i$. In Fig. 2 $P_i$ is the power pulse for printing, provided at the output of the AND circuit $3_i$. It should be appreciated that the thermal element is heated during the duration of that power pulse. The generation of the power pulse $P_i$ depends upon the content of the memory 2. The power pulse $P_i$ is started by a trigger pulse $P_{ti}$, and is terminated at the end of the power pulse HV. This feature of the power pulse $P_i$ is obtained by a characteristic of a thyristor SCR. That is to say, a thyristor becomes conductive when a trigger signal is applied to the gate of the thyristor, and the conductive condition continues until the anode/cathode voltage of the thyristor becomes zero. The trigger pulse $P_{ti}$ occurs at the output of the AND circuit $11_i$ synchronised with the clock pulse h. Hence, the duration of the power pulse can be adjusted by adjusting the timing of the trigger pulse $P_{ti}$, and since the timing of the trigger pulse is controlled by the timing of the clock pulses h, the duration of the power pulse $P_i$ is adjustable in the same steps as the clock pulses ($= 125 \mu S$). Hence, the pulse width of the power pulse has an error less than 125 $\mu S$, and that error is quite small compared with the usual heating time ($=1.5$ millisecond) and hence the error is not important.

Returning to Fig. 1, a printing period measuring unit 4 measures the duration $TW_1$ to $TW_7$ between the present printing start timing $T_0$ and the ends of each of the previous seven lines $I_1$ to $I_7$ and stores the measured results. $TW_1$ is the duration between $T_0$ and the end of the power pulse HV of the previous line ($I_1$) (see Fig. 2). $TW_2$ is the duration between $T_0$ and the end of the power pulse HV of two lines before ($I_2$). Also, $TW_7$ is the duration between $T_0$ and the end of the power pulse HV of seven lines before ($I_7$). Therefore, the inputs of the unit 4 are the signal $T_0$ and the power pulse HV. The measured results $TW_1$ to $TW_7$ in the unit 4 can be read out at the same time in the synchronised condition with the clock pulse h, and the outputs of the unit 4 are fed to a comparator 5. If some of the durations $TW_1$ to $TW_7$ exceed 10 milliseconds, the measured duration is substituted to 10 milliseconds in the unit 4. The other input of the comparator 5 is the output of a memory 6 which stores a reference relationship between the pulse width of the power pulse HV and the heating duration between lines corresponding to that pulse width as shown in Table 1.

TABLE 1

| Address (pulse width mS) | | Content (duration mS) |
|---|---|---|
| 1 | (1.500) | 10.0 ($= w_1$) |
| 2 | (1.375) | 7.0 ($= w_2$) |
| 3 | (1.250) | 5.0 ($= w_3$) |
| 4 | (1.125) | 3.5 ($= w_4$) |
| 5 | (1.000) | 2.5 ($= w_5$) |
| 6 | (0.875) | 1.5 ($= w_6$) |
| 7 | (0.750) | 1.0 ($= w_7$) |
| 8 | (0.625) | 0.5 ($= w_8$) |
| 9 | (0.500) | 0.0 ($= w_9$) |
| 10 | (0.500) | 0.0 ($= w_9$) |
| 11 | (0.500) | 0.0 ($= w_9$) |
| 12 | (0.500) | 0.0 ($= w_9$) |

4

The memory 6 has 12 areas each corresponding to the clock pulses $h_1$ to $h_{12}$. The address of the memory 6 is assumed to correspond to the pulse width, and the content of each address shows the reference duration for providing the desired density when the pulse width corresponding to the address is applied. For instance, the address 1 with the content 10 shows that the necessary pulse width is 1.5 mS for providing the desired density when the printing duration is 10 mS. Also, the address 5 with the content 2.5 shows that the necessary pulse width is 1.0 mS when the printing duration is 2.5 mS. The minimum pulse width when the printing duration is zero, is 0.5 mS. The addresses 10 to 12 of the memory 6 are provided just for simplifying the control of the apparatus. The content of the memory 6 is read out sequentially after $T_0$ by the clock pulse h, i.e. the address (1) is read out by the clock pulse $h_1$, the address (2) is read out by the block pulse $h_2$, and the address (12) is read out by the clock pulse $h_{12}$. Of course the period of reading out each address is 125 $\mu$S. The line w of Fig. 2 shows the output of the memory 6.

The comparator 5 in Fig. 1 compares the outputs $TW_1$ to $TW_7$ of the unit 4 with the outputs $w_1$ to $w_7$ of the memory 6, respectively, and provides comparison results $C_1$ to $C_7$. The comparison result $C_i$ is "1" when the output $TW_i$ of the unit 4 is larger than the output $w_i$ of the memory 6, and the result $C_i$ is "0" when the former is less than the latter. For instance, when $TW_1 = 3.0$ mS, $TW_2 = 5.0$ mS, $TW_3 = 9.5$ mS, and $TW_4 = TW_5 = TW_6 = TW_7 = 10.0$ mS, the comparison results $C_1$ to $C_7$ are shown in the Table 2.

TABLE 2

| Clock pulse | Comparison result | | | | | | |
|---|---|---|---|---|---|---|---|
| | $C_1$ | $C_2$ | $C_3$ | $C_4$ | $C_5$ | $C_6$ | $C_7$ |
| $h_1$ | $3-10<0$ <br> 0 <br> $tw_1-w_1$ | $tw_2-w_2$ <br> 0 <br> $=5-10<0$ | $tw_3-w_1$ <br> 0 <br> $9.5-10<0$ | 1 <br> $12-10>0$ | 1 | 1 | 1 |
| $h_2$ | $tw_1-w_2$ <br> 0 | $tw_2-w_2$ <br> 0 | 1 | 1 | 1 | 1 | 1 |
| $h_3$ | 0 | 1 | 1 | 1 | 1 | 1 | 1 |
| $h_4$ | 0 | 1 | 1 | 1 | 1 | 1 | 1 |
| $h_5$ | 1 | 1 | 1 | 1 | 1 | 1 | 1 |
| $h_6$ | 1 | 1 | 1 | 1 | 1 | 1 | 1 |
| . <br> . <br> . <br> . <br> . <br> . <br> . | . <br> . <br> . <br> . <br> . <br> . <br> . | . <br> . <br> . <br> . <br> . <br> . <br> . | . <br> . <br> . <br> . <br> . <br> . <br> . | . <br> . <br> . <br> . <br> . <br> . <br> . | . <br> . <br> . <br> . <br> . <br> . <br> . | . <br> . <br> . <br> . <br> . <br> . <br> . | . <br> . <br> . <br> . <br> . <br> . <br> . |
| $h_{12}$ | 1 | 1 | 1 | 1 | 1 | 1 | 1 |

The comparison results $C_1$ to $C_7$ in Table 2 show which clock pulse ($h_1$ to $h_{12}$) should trigger the starting of the power pulse to a thermal element, depending upon the previous printing durations $l_1$ to $l_7$. That is to say, $h_1$ (0001111) shows the case where a thermal element is triggered at the timing of $h_1$ and the pulse width in this case is 1.5 mS (=125 $\mu$S x 12) when one of the heating durations $TW_1$ to $TW_7$ is longer than 10 mS (see Table 1). In this case, $TW_4$ to $TW_7$ are larger than 10 mS (since $C_4$ to $C_7$ are 1), and $TW_1$ to $TW_3$ are shorter than 10 mS. Therefore, if the previous three lines $l_1$ through $l_3$ are not energised, or those three lines are white, thermal elements $1_1$ to $1_{32}$ are energised at the timing of $h_1$, and then those energised elements are provided with pulses of pulse width 1.5 mS.

Similarly, thermal elements are energised at the timing $h_2$ and the pulse width is 1.375 mS (= 1.5 − 0.125), when the previous two lines $l_1$ and $l_2$ are white as in Table 2.

5

Similarly, thermal elements are energised at the timing $h_3$ or $h_4$ and the pulse width is 1.250 mS or 1.125 mS, when the previous one line $l_1$ is white as in Table 2.

After the timing $h_5$, thermal elements are triggered irrespective of the condition of the previous lines.

It should be appreciated that once a thermal element is energised, that thermal element is active until the power pulse HV stops, since current to the thermal element is conducted through a thyristor SCR, which continues in the ON state, once a gate signal is applied, until the anode voltage becomes zero. Therefore, when a thermal element is energised at the timing $h_1$, that thermal element is active from $h_1$ to $h_{12}$.

The parallel outputs $C_1$ to $C_7$ of the comparator 7 are applied to the register 7, which converts the parallel signals $C_1$ to $C_7$ to the series signal $CS_i$. The first information of the series signal $CS_i$ is $C_7$ and the last information of that signal $CS_i$ is $C_1$. The $CS_1$ ($C_7$ to $C_1$) is provided within the one clock pulse duration ($h_2$—$h_1$) as shown in Fig. 2. Hence, each clock pulse $h_1$ to $h_{12}$ provides the corresponding series signal $CS_1$ to $CS_{12}$. In $CS_1$, the first portion a corresponding to $C_7$ to $C_4$ is at high level, and the latter portion b corresponding to $C_3$ to $C_1$ is at low level as shown in Fig. 2.

The output ($CS_1$ to $CS_{12}$) of the register 7 is applied to the S (set) input of the flip-flops $8_1$ to $8_{32}$ through the OR circuit 9, which also receives the clock pulse h ($h_1$ to $h_{12}$). Therefore, the flip-flops $8_1$ to $8_{32}$ are set to 1 at the initial stage of each timing period ($h_1$ to $h_{12}$) even when the output ($CS_1$ to $CS_{12}$) of the register 7 is entirely at a low level. When a flip-flop $8_1$ to $8_{32}$ receives the S (set) signal from the OR circuit 9 and the R (reset) signal from the memory 10 at the same time, the S (set) signal has priority, and the flip-flop is set to the 1 condition.

On the other hand, the white/black information of the previous seven lines $l_1$ to $l_7$ for each dot are stored in the second memory 10. The information items are:

For the first dot; $D_{11}$ to $D_{17}$

For the second dot; $D_{21}$ to $D_{27}$

For the i'th dot; $D_{i1}$ to $D_{i7}$

For the 32'th dot; $D_{321}$ to $D_{327}$.

It should be noted that the first portion i of the suffix of the general form $D_{ij}$ shows the dot number, and the last portion j of the suffix shows the line number. The content of the memory 10 is read out by each clock signal $h_1$ to $h_{12}$ repetitively, and in each reading operation the oldest information $D_{i7}$ is read out first, and $D_{i6}$, $D_{i5}$, $D_{i4}$, $D_{i3}$, $D_{i2}$ and $D_{i1}$ are read out in sequence as shown in Fig. 2. These read-out information items from the memory 10 are applied to the R (reset) terminal of the flip-flops $8_1$ to $8_{32}$.

Accordingly, each flip-flop $8_1$ to $8_{32}$ is set to 1 according to the previous printing lines $l_1$ to $l_7$, and is reset to zero according to the past printed information from the memory 10. Therefore, each flip-flop $8_1$ to $8_{32}$ remains to be set in condition 1 at the end of each clock pulse duration only when the flip-flop is not reset by the output of the memory 10, after the last set signal is applied to the flip-flop. For instance, in the $h_1$ clock pulse duration, the flip-flops $8_1$ to $8_{32}$ are set to 1 four times by the comparison outputs $C_7$, $C_6$, $C_5$ and $C_4$ (see Table 2), and so if the last three printed information items $D_{i1}$, $D_{i2}$ and $D_{i3}$ in the i'th dot are completely zero, the i'th flip-flop $8_i$ can remain to be set at 1 at the end of the $h_1$ clock pulse duration.

The outputs of the flip-flops $8_1$ to $8_{32}$ are applied to the AND circuits $11_1$ to $11_{32}$, respectively, and those AND circuits provide the trigger signals $P_{t1}$ to $P_{t32}$. The AND circuits $11_1$ to $11_{32}$ also receive the clock pulses $h_1$ to $h_{12}$. Therefore, the trigger pulse $P_{ti}$ for the i'th dot is generated at the end of the first clock pulse duration $h_1$ when the flip-flop $8_i$ is 1 at that timing. That trigger pulse $P_{ti}$ might be generated again at the end of the second clock pulse duration $h_2$ if the flip-flop $8_i$ is in the 1 state at that timing, and so that trigger pulse might be generated a plurality times at the end of each clock pulse duration. Among the plurality of trigger pulses, only the first trigger pulse is effective to fire the thyristor SCR to determine the pulse width of the power pulse applied to the thermal element.

As described above, the trigger pulse $P_{ti}$ of the output of the AND circuit $11_i$ is applied to the thermal element $1_i$ through the AND circuit $3_i$, which also receives the black/white information of the present line from the memory 2. Therefore, if the dot to be printed is black, the power pulse applied to the thermal element starts at the timing of the trigger pulse and that power pulse finishes at the end of the power pulse HV. Therefore, by adjusting the timing of the trigger pulse or the starting point of the power pulse, according to the previously printed dots in the past seven lines and the printing duration of the past seven lines, the pulse width of the power pulse applied to the thermal element is adjusted so that the colour density or the print concentration is appropriate.

Although the above embodiment describes the adjustment of the rise (start) point of the power

6

pulse, it is also possible, alternatively, that the rise point is fixed and the fall (end) point is adjusted. In that case, the arrangement of Table 1 is reversed, so that the address 1 includes 0.0 and the address 12 includes 10.0.

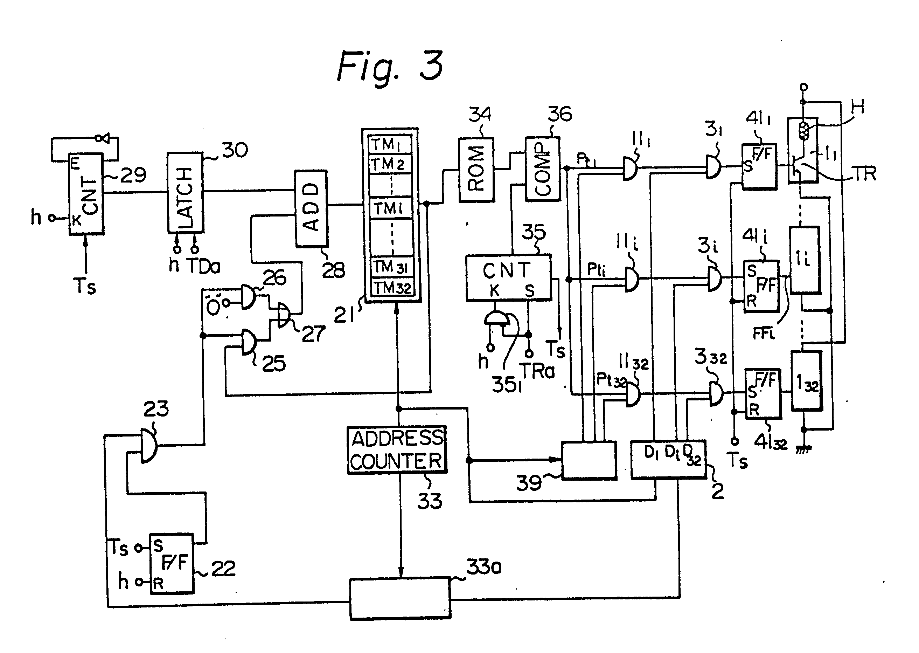

Fig. 3 shows a block diagram of a second embodiment of a thermal printing apparatus according to the present invention. In Fig. 3, the reference numerals $1_1$ to $1_{32}$ are thermal elements each having a heater H and a switching transistor TR, which is a replacement for a thyristor SCR in Fig. 1. One end of each heater H is connected to the power supply terminal HV, which applies the power pulse having the predetermined pulse width to the heaters H. The other end of each heater is grounded through the respective switching transistor TR. The thermal elements $1_1$ to $1_{32}$ are aligned along a straight line for dot matrix printing, and by selectively heating some thermal elements and feeding a therm?' paper at a predetermined speed in a direction perpendicular to the line of thermal elements, the desired pattern is printed on the paper. The control of the selective heating of the thermal elements is performed by an integrated circuit memory (not shown) which stores the pattern to be printed for each character code.

Each thermal element is designed so that the desired colour density or concentration is obtained by heating the element for 1.8 milliseconds (mS) with the predetermined power from the power terminal HV, and the temperature of the element returns to the static or normal temperature in a time of 10 mS after heating.

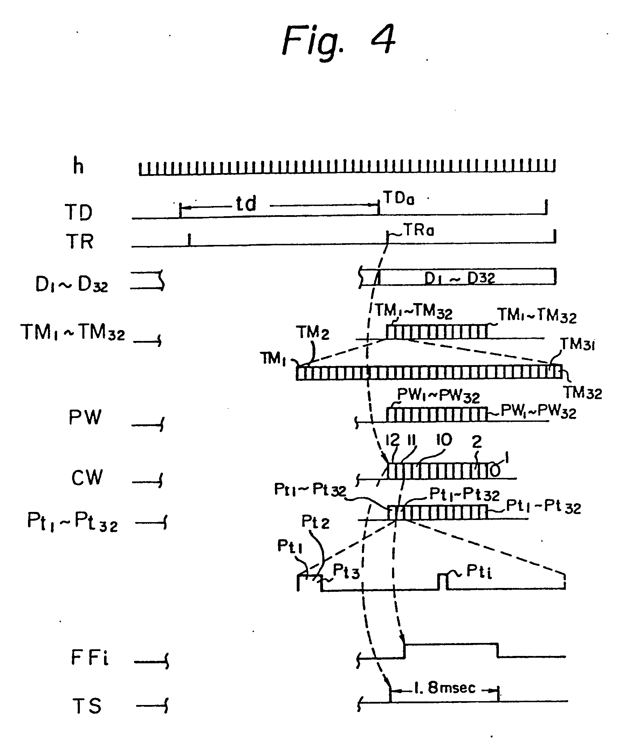

The duration for printing a black dot for each thermal element, or the duration between the time that the last black dot was printed and the present time ($TR_a$) is measured and stored in a memory 21. In the memory 21, the symbol $TM_1$ shows the duration for the first dot printed by the first element $1_1$ between the time that the last black dot was printed and the present time ($TR_a$), and $TM_{32}$ shows the duration of the 32'th dot printed by the element $1_{32}$ between the time of the last printed black dot and the present time ($TR_a$). The durations $TM_1$ to $TM_{32}$ are measured using clock pulses (h) which have a period of 150 $\mu$S (see Fig. 4), and the measured result of the printing duration is quantized by the number of clock pulses between the printing duration. Therefore, the measured result of the printing duration is in the range from 0 to 67, in which 0 corresponds to the printing duration 0, and 67 corresponds to the printing duration 10.05 mS ($=0.15 \times 67$). When the printing duration is longer than 10.05 mS, the value 67 is stored in the memory 21.

The contents of the memory 21 are read out in sequence according to the address designated by the address counter 33, and the read-out information is applied to a read-only memory 34. The address counter applies the address 1 to 32 to the memory 21, and when the content of the counter 33 is 1 the $TM_1$ is read out, and when the content of the counter 33 is 32 the $TM_{32}$ is read out.

The read-out memory 34 stores a table for conversion between the printing duration and the necessary pulse width for providing the desired colour density, so that the printing duration from the memory 21 is converted to the necessary pulse width of the power pulse. The memory 34 contains the information shown in Table 3, and by applying the output of the memory 21 to the address (right-hand column of Table 2) of the read-only memory 34, the quantized pulse width (PW) is obtained after conversion. The output of the memory 34 is quantized by the clock pulse (h) which has the period of 105 $\mu$S. Hence, the output 12 at the address 67 means 1.8 mS ($0.15 \times 12$), the output 11 at the addresses 66 to 52 means 1.65 mS ($=0.15 \times 11$). The converted output of the memory 34 is applied to one input of a comparator 36, which provides the actual rise point of the power pulse.

TABLE 3

| Address (TM) | Content (PW) |
|---|---|
| 67 (10.05 msec) | 12 (1.80 msec) |
| 66 (9.90 msec) | 11 (1.65 msec) |
| 65 (9.75 msec) | 11 (1.65 msec) |
| . | . |
| 52 (7.80 msec) | 11 (1.65 msec) |
| 51 (7.65 msec) | 10 (1.50 msec) |
| . | . |
| 39 (5.85 msec) | 10 (1.50 msec) |
| 38 (5.70 msec) | 9 (1.35 msec) |
| . | . |
| 31 (4.65 msec) | 9 (1.35 msec) |
| 30 (4.50 msec) | 8 (1.20 msec) |
| . | . |
| 25 (3.95 msec) | 8 (1.20 msec) |
| 24 (3.80 msec) | 7 (1.05 msec) |
| . | . |
| 20 (3.00 msec) | 7 (1.05 msec) |
| 19 (2.85 msec) | 6 (0.90 msec) |
| . | . |
| 16 (2.40 msec) | 6 (0.90 msec) |
| 15 (2.25 msec) | 5 (0.75 msec) |
| . | . |
| 13 (1.95 msec) | 5 (0.75 msec) |
| 12 (1.80 msec) | 4 (0.60 msec) |
| . | . |
| 10 (1.50 msec) | 4 (0.60 msec) |
| 9 (1.35 msec) | 3 (0.45 msec) |
| . | . |
| 0 (0.00 msec) | 3 (0.45 msec) |

The comparator 36 receives the reference input from the output of the counter 35, which is initiated to the value 12 by a print start pulse ($TR_a$) as shown in CW of Fig. 4 and is decremented one by one by the clock pulse (h) until the content of the counter 35 reaches zero. The clock pulse (h) is applied to the decrement input K of the counter 35 through the AND circuit $35_1$. The comparator 36 compares the converted output of the memory 34 with the output of the counter 35, and when the two inputs coincide, the comparator 36 provides output signals which act as the trigger pulses $P_{t1}$ to $P_{t32}$, each of which is obtained when the corresponding content $TM_1$ to $TM_{32}$ in the memory 21 is read out.

The output of the comparator 36 is applied to one input of the AND circuits $11_1$ to $11_{32}$, to each of which is also fed the gate signal from the output of the decoder 39. A decoder 39 decodes the output of the address counter 33 and the decoded outputs are fed to each of the AND circuits $11_1$ to $11_{32}$. Therefore, when the address counter 33 designates the i'th address $TM_i$ of the memory 21, the decoder 39 also feeds the i'th output to the AND circuit $11_i$. The trigger pulse $P_{ti}$ which determines the printing duration $TM_i$ is obtained at the output of the AND circuit $11_i$.

The outputs of each of the AND circuits $11_1$ to $11_{32}$ is 1 when the counter 35 has the particular content, and is 0 when the counter 35 has other contents. The output of each of the AND circuits $11_1$ to $11_{32}$ is applied to one input of each of the AND circuits $3_1$ to $3_{32}$. Each of the AND circuits $3_1$ to $3_{32}$ also receives the output of the memory 2, which provides black/white information $D_1$ to $D_{32}$ to be printed at each dot of the present line ($I_0$). Hence, when the memory 2 designates a black dot at the i'th dot $D_i$, the AND circuit $3_i$ provides the output signal when the trigger pulse $P_{ti}$ is fed from the comparator 36.

The output signal of the AND circuit $3_i$ sets the corresponding flip-flop $41_i$ to one state, and that flip-flop $41_i$ is reset to zero by a print-end signal $T_s$ (see Fig. 4). The end signal $T_s$ also causes feeding of the paper by one line. Hence, when the flip-flop $41_i$ is in one state, the switching transistor TR for the corresponding dot is made conductive, and then the heater H of the respective thermal element is energised during the same duration. Hence, the pulse width applied to the thermal element is adjusted according to the printing duration and optimum colour density is obtained.

Now revision of the memory 21 will be described in accordance with Fig. 3. Firstly, in the memory 21 if the present dot is black (that is to say, the thermal element is energised), the content $DM_i$ which is the printing duration for that black dot is changed to zero, and other contents relating to white dots are unchanged. This operation is carried out by a flip-flop 22, AND circuits 23, 25 and 26, and the OR circuit 27. The flip-flop 22 is set to 1 by the print-end signal $T_s$ and is reset to 0 by the clock pulse (h). Then the flip-flop 22 is in the ON state during one clock period when the printing operation finishes, and the AND circuit 23 opens during the same period. The AND circuit 23 opens either the AND circuit 25 or the AND circuit 26. The previous information $TM_i$ in the memory 21 is applied to the AND circuit 25, and "0" information is applied to the other AND circuit 26. The previously-printed information $D_i$ is provided from the memory 2 through a selector 33a, which selects the data in the memory 2 according to the address designated by the address counter 33. When the printed information $D_i$ is "white" (or zero), the AND circuit 23 is closed, and then the AND circuit 25 which receives the previous output $TM_i$ from the memory 21 is opened. Hence, the previous output $TM_i$ passes through the AND circuit 25 and the OR circuit 27, and is stored again in the memory 21 through an adder 28. At this time, a latch circuit 30 provides no output, and the adder 28 provides the same sum as the output of the OR circuit 27. Hence, when the printed information $D_i$ is 0 (or white), the memory 21 is not changed at this stage. On the other hand, if the printed information $D_i$ is 1 (or black), the AND circuits 23 and 26 are opened, and the AND circuit 25 is closed. The "0" input applied to the AND circuit 26 therefore passes through the circuits 26, 27 and 28 and is stored in the memory 21. Hence, when the printed information $D_i$ is 1 (or black), the corresponding output $TM_i$ is changed to 0.

Next, when the printed information $D_i$ is white, the corresponding content $TM_i$ in the memory 21 is revised by adding the printing time of the present line to the previous data $TM_i$. This operation is carried out by a counter 29, the latch circuit 30 and the adder 28. The counter 29 is reset to zero by the print-end signal $T_s$ of the previous cycle, and is incremented each time the clock signal (h) is applied to the K input terminal of the counter 29. It is assumed that the counter 29 stops counting when its count reaches 67. An inverter connected between the output and the input of the counter 29 causes the counter to stop by applying a signal to an enable input terminal E when the counter 29 overflows.

Since the period of the clock pulse (h) is 0150 $\mu$S, the content 67 corresponds to the printing duration of 10.05 mS ($=0.15 \times 67$). The content of the counter 29 is transferred to the latch circuit 30 by the printing start signal $TD_a$, and is held in the latch circuit 30 during the whole printing cycle. The output of the latch circuit 30 is applied to one input of the adder 28, the other input of which receives the previous data $TM_1$ to $TM_{32}$ of the printing duration from the memory 21. Therefore, the sum of the previous data $TM_1$ to $TM_{32}$ and the content of the counter 29 which shows the printing time for the present line is obtained at the output of the adder 28, and that sum is stored again in the memory 21. In this case, it is assumed that the adder 28 provides the sum 67 when the sum exceeds 67.

As described above, the content of the memory 21 is changed to zero when the present dot is black, or that content is revised by adding the present printing duration to the previous data when the present dot is white. Hence, the memory 21 always provides the printing duration for each dot.

Fig. 4 is an operational time chart for the apparatus of Fig. 3. In Fig. 4, the clock pulse h appears every 150 $\mu$S. TD shows the timing at which the data to be printed is applied to the memory 2. The

**0018762**

duration $t_d$ between the TD pulses is not constant. The printing start pulse TR is generated a short time after each TD pulse. The data memory 2 is updated to hold the new data by the TD pulse. Updating of the memory 21 is finished between the present data reception signal $TD_a$ and the present printing start pulse $TR_a$. $TM_1$—$TM_{32}$ in Fig. 4 shows the read out of the printing duration from the memory 21. As is apparent from Fig. 4, the data $TM_1$ to $TM_{32}$ are read out when the present printing start signal $TR_a$ appears, and are read out repetitively in every clock cycle. In each clock cycle the data $TM_1$ to $TM_{32}$ are read out in series.

Also, the output PW of the memory conversion table 34 is read out from the memory 34 repetitively by the clock pulse (h), and in each clock cycle the outputs PW are read out in series.

The output CW of the counter 35 is 12 when the printing start pulse $TR_a$ appears, and that output CW is decremented by one every time a clock pulse (h) is provided. When the counter 35 reaches zero, the print end signal $T_s$ is provided from the counter 35.

The comparator 36 provides the outputs $P_{t1}$ to $P_{t32}$ in every clock cycle, and $P_{ti}$ is defined by the output PW of the memory conversion table 34, and the count output of the counter 35. For instance, when the printing durations $TM_1$, $TM_2$, $TM_3$ and $TM_i$ for the first, the second, the third and the i'th dot, respectively, are between 7.8 mS and 9.9 mS, that is to say when the value in the memory 21 for those dots is between 52 and 66, the output of the comparator 36 for those dots is 1 when the output CW of the counter 35 is 11 (see Table 3). Other dots make the output of the comparator 36 1 when the counter 35 is at another value.

$FF_i$ in Fig. 4 shows the output $FF_i$ of the flip-flop $41_i$, and that flip-flop is set to 1 when the output CW of the counter 35 is 11, to start the energisation of the thermal element, and is reset to 0 by the printing-end signal $T_s$ which is generated after 1.8 mS from the printing reference signal $TR_a$.

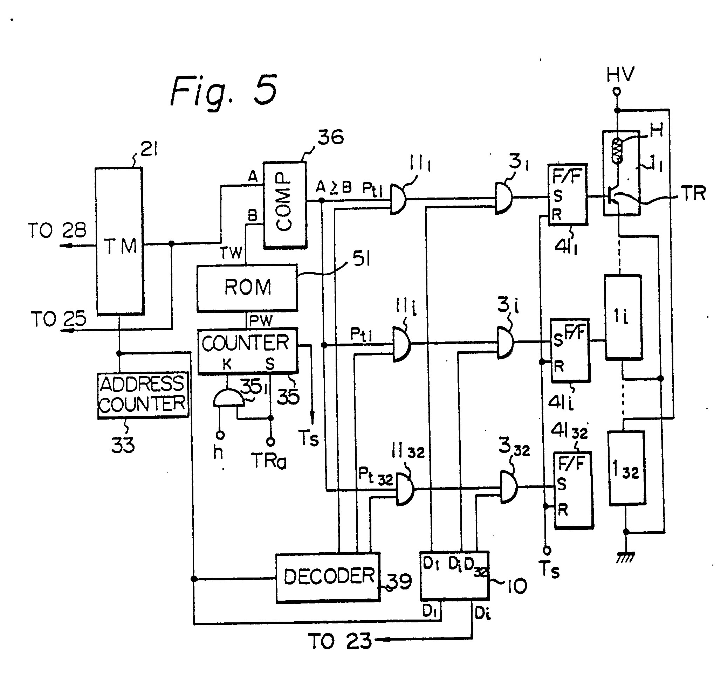

Fig. 5 shows a modification of the apparatus of Fig. 3, and the feature of the apparatus of Fig. 5 is that the conversion table implemented by a read-only memory 51 is provided between the comparator 36 and the counter 35, whilst the conversion table memory 34 in Fig. 3 is provided between the memory 21 and the comparator 36. Other portions of Fig. 5 are the same as those in Fig. 3.

Accordingly, the conversion table memory 51 in Fig. 5 converts the output of the counter 35, whereas the conversion table memory 34 in Fig. 3 converts the output of the memory 21. The comparator 36 in Fig. 5 compares the output of the memory 21 with the output of the memory 51.

The conversion table memory 51 has twelve addresses corresponding to the content of the counter 35, and in each address an integer from 67 to 0 is stored as shown in Table 4. The content 67 to 0 in the table is the value quantized by the clock pulse period 150 $\mu$S, so the value 67 means 10.05 mS (=0.15 × 67), and the value 52 in the address 11 means 7.8 mS (=0.15 × 52).

TABLE 4

| Address (PW) | Content (TW) |
|---|---|
| 12 (1.8 msec) | 67 (10.05 msec) |
| 11 (1.65 msec) | 52 (7.80 msec) |
| 10 (1.50 msec) | 39 (5.85 msec) |
| 9 (1.35 msec) | 31 (4.65 msec) |
| 8 (1.20 msec) | 25 (3.95 msec) |
| 7 (1.05 msec) | 20 (3.00 msec) |
| 6 (0.90 msec) | 16 (2.40 msec) |
| 5 (0.75 msec) | 13 (1.95 msec) |
| 4 (0.60 msec) | 10 (1.50 msec) |
| 3 (0.45 msec) | 0 (0.00 msec) |

In this embodiment, the measured printing duration from the memory 21 is compared with the converted output of the table memory 51, and when the former exceeds the latter, the comparator 36 provides an output, which initiates energisation of the corresponding thermal element.

As described above in detail, in apparatus according to the present invention the pulse width or the power applied to each thermal element is adjusted according to the previous printing data and/or the printing speed. Therefore, high speed printing in which the printing duration between lines is less than 10 mS is possible by controlling the pulse width of the power pulse applied to an individual thermal element. Hence, a high speed thermal printer apparatus can be achieved.

Furthermore, the present thermal printing apparatus is advantageous for use in a facsimile receiver, in which the data reception rate is variable. In this case, even when the data reception rate is high, the present printer can print in accordance with the received signal, without losing the data, by shortening the printing duration.

## Claims

1. Thermal printing apparatus comprising a plurality of single dot printing thermal elements $(1_1 — 1_{32})$ each having a heater (H) and being aligned in a straight line perpendicular to the direction of movement of a thermal paper; a corresponding plurality of switching means (SCR) respectively connected in series with the heaters; a power supply (HV) to supply electric power to the heaters via the respective switching means; and control means for controlling the switching means to supply pulses of electric power to the heaters selectively, and for selecting the durations of the pulses of electric power, the control means comprising a first digital memory (2) which stores black/white printing information for each thermal element; characterised in that the control means further comprises a second digital memory (10) which stores, for each heater, information relating to the previous energisation state of the respective heater; conversion means (8, 11) for converting the output of the second digital memory to a trigger timing pulse for initiating the heating of each thermal element (H); and AND circuit means (3) for providing the logical product of the trigger timing pulse and the output of the first digital memory to fire each thermal element as required, whereby the control means operates in response to the stored information relating to the previous energisation state of each respective heater to control the duration of each pulse of electric power as a function of that stored information.

2. Apparatus according to Claim 1, characterised in that the second digital memory (10) stores the black/white information for a predetermined number of previously-printed lines for each dot; and in that the conversion means comprises a printing period measuring unit (4) which measures the duration between start of timing of the present line and the end of the previously-printed line, a memory (6) which stores the relationship between the pulse width applied to a thermal element and the heating period between the present line and the previously-printed line, a comparator (5) for comparing the output of the printing period measuring unit (4) with the output of the memory (6), a plurality of flip-flops $(8_1 — 8_{32})$ settable by the output of the comparator (5) and resettable by the output of the second digital memory (10), and AND circuit means $(11_1 — 11_{32})$ for providing the logical product of the output of the flip-flops and a clock timing pulse to provide the trigger timing pulse.

3. Apparatus according to Claim 2, characterised in that the predetermined number of previously-printed lines stored in the second digital memory (10) is seven lines.

4. Apparatus according to Claim 1, characterised in that the second digital memory (10) stores the duration between the present time and the time that the previous last black dot was printed by a particular thermal element; in that the second digital memory is revised every time a new line is printed by clearing the content to zero for dots which are printed black, and by adding the content to the time required for printing the present line for dots which are printed white; and in that the conversion means comprises a conversion table implemented by a read-only memory (34) storing the relationship between the previously-printed black dot stored in the second digital memory and the necessary pulse width for a power pulse applied to a thermal element, a counter (35) for providing clock pulses, a comparator (36) for comparing the output of the conversion table and the output of the counter (35) and means $(11_1 — 11_{32}, 39)$ for distributing the output of the comparator to the thermal elements to provide a trigger timing pulse.

5. Apparatus according to Claim 4, characterised in that the second digital memory (10) stores data only when the printing duration is less than 10 mS, and when the printing duration is longer than 10 mS stores the value 10 mS.

6. Apparatus according to Claim 4 or Claim 5, characterised in that the conversion table (51) converts the output of the counter (35); and in that the comparator (36) compares the output of the second digital memory (21) with the output of the conversion table.

## Revendications

1. Dispositif d'impression thermique comportant un ensemble $(1_1$ à $1_{32})$ d'éléments thermiques d'impression d'un point unique ayant chacun un organe (H) de chauffage et étant alignés en une ligne droite perpendiculaire à la direction de mouvement d'un papier thermique; un ensemble correspondant de moyens de commutation (SCR) respectivement connectés en série avec les organes de chauffage; une alimentation (HV) pour fournir la puissance électrique aux organes de chauffage à travers les moyens de commutation respectifs; et des moyens de commande pour commander les moyens de commutation afin de délivrer des impulsions de puissance de façon sélective aux organes de chauffage, et pour sélectionner les durées des impulsions de puissance électrique, ces moyens de commande

11

comportant und première mémoire numérique (2) qui stocke les informations d'impression blanc/noir pour chaque élément thermique; caractérisé par le fait que les moyens de commande comportent en plus une second mémoire numérique (10) qui stocke pour chaque organe de chauffage, les informations concernant l'état précédent d'activation de l'organe de chauffage respectif; des moyens de conversion (8, 11) pour convertir la sortie de la seconde mémoire numérique en une impulsion de déclenchement synchrone pour déclencher le chauffage de chaque élément thermique (H); et des moyens à circuit ET (3) pour fournir le produit logique de l'impulsion de déclenchement synchrone et de la sortie de la première mémoire numérique pour activer comme il se doit chaque élément thermique, grâce à quoi les moyens de commande agissent en fonction des informations stockées concernant l'état précédent d'activation de chaque organe de chauffage respectif pour commander la durée de chaque impulsion de puissance électrique en fonction de cette information gardée en mémoire.

2. Dispositif suivant la revendication 1, caractérisé par le fait que la seconde mémoire numérique (10) stocke les informations blanc/noir pour un nombre prédéterminé de lignes précédemment imprimées pour chaque point; et par le fait que les moyens de conversion comportent une unité (4) de mesure de la période d'impression qui mesure la durée entre le début de la synchronisation de la présente ligne et la fin de la ligne précédemment imprimée, une mémoire (6) qui stocke la relation entre la largeur de l'impulsion appliquée à un élément thermique et la période de chauffage entre la présente ligne et la ligne précédemment imprimée, un comparateur (5) pour comparer la sortie de l'unité (4) de mesure de la période d'impression avec la sortie de la mémoire (6), un ensemble de bascules $(8_1$ à $8_{32})$ pouvant être positionnées par la sortie du comparateur (5) et remises à zéro par la sortie de la seconde mémoire numérique (10), et des moyens à circuit ET $(11_1$ à $11_{32})$ pour délivrer le produit logique de la sortie des bascules et des impulsions de l'horloge de synchronisation pour fournir l'impulsion de déclenchement synchrone.

3. Dispositif suivant la revendication 2, caractérisé par le fait que le nombre prédéterminé de lignes précédemment imprimées stockées dans la seconde mémoire numérique (10) est de sept lignes.

4. Dispositif suivant la revendication 1, caractérisé par le fait que la seconde mémoire numérique (10) stocke la durée entre le temps présent et le moment où le dernier point noir précédent a été imprimé par un élément thermique particulier; par le fait que la seconde mémoire numérique est mise à jour chaque fois qu'une nouvelle ligne est imprimée en effaçant à zéro le contenu pour les points imprimés en noir, et en ajoutant le contenu au temps nécessaire pour imprimer la présente ligne pour les points imprimés en blanc; et par le fait que les moyens de conversion comportent une table de conversion réalisée sous forme d'une mémoire morte 34 stockant la relation entre le point noir précédemment imprimé stocké dans la seconde mémoire numérique et la largeur d'impulsion nécessaire pour une impulsion de puissance appliquée à un élément thermique, un compteur (35) pour fournir les impulsions d'horloge, un comparateur (36) pour comparer la sortie de la table de conversion et la sortie du compteur (35) et des moyens $(11_1$ à $11_{32}, 39)$ pour distribuer la sortie du comparateur aux éléments thermiques pour délivrer une impulsion de déclenchement synchrone.

5. Dispositif suivant la revendication 4, caractérisé par le fait que la seconde mémoire numérique (10) stocke les données seulement si la durée d'impression est inférieure à 10 ms, et qu'elle stocke la valeur 10 ms si la durée d'impression est supérieure à 10 ms.

6. Dispositif suivant les revendications 4 ou 5, caractérisé par le fait que la table de conversion (51) convertit la sortie du compteur (35); et par le fait que le comparateur (36) compare la sortie de la seconde mémoire numérique (21) avec la sortie de la table de conversion.

## Patentansprüche

1. Thermische Druckvorrichtung mit mehreren jeweils einen einzigen Punkt druckenden thermischen Elementen $(1_1$—$1_{32})$, die jeweils ein Heizelement (H) aufweisen und in einer geraden Linie senkrecht zur Vorschubrichtung eines thermischen Papiers ausgerichtet sind; mit einer entsprechenden Anzahl von Schaltmitteln (SCR), die jeweils mit den Heizelementen in Reihe geschaltet sind; mit einer Stromversorgungseinrichtung (HV), um die Heizelemente über das jeweilige Schaltmittel mit elektrischer Energie zu versorgen; und mit Steuermitteln zum Steuern der Schaltmittel, um den Heizelementen selektiv Impulse elektrischer Energie zuzuführen, und zum Wählen der Dauer der Impulse elektrischer Energie, wobei die Steuermittel einen ersten digitalen Speicher (2) aufweisen, der für jedes thermische Element eine Schwarz/Weiß-Druckinformation speichert; dadurch gekennzeichnet, daß die Steuermittel aufweisen: einen zweiten digitalen Speicher (10), der für jedes Heizelement eine Information bezüglich des früheren Energieversorgungszustandes des betreffenden Heizelements speichert; Umsetzmittel (8, 11) zum Umsetzen des Ausgangssignals des zweiten digitalen Speichers in einen Auslösezeitimpuls zum Auslösen des Heizens jedes thermischen Elements (H); und eine UND-Schaltung (3) zur Bildung der logischen Verknüpfung des Auslösezeitimpulses mit dem Ausgangssignal des ersten digitalen Speichers, um jedes thermische Element in der erforderlichen Weise zu zünden, so daß die Steuermittel in Abhängigkeit von der gespeicherten, sich auf den früheren Energieversorgungszustand jedes betreffenden Heizelements beziehenden Information bewirken, daß die Dauer jedes Impulses elektrischer Energie als Funktion der gespeicherten Information gesteuert wird.

2. Vorrichtung nach Anspruch 1, dadurch gekennzeichnet, daß der zweite digitale Speicher (10) die Schwarz/Weiß-Information für eine vorbestimmte Anzahl zuvor gedruckter Zeilen für jeden Punkt speichert und daß die Umsetzmittel eine Druckdauermeßeinheit (4), die die Dauer zwischen dem Anfangszeitpunkt der augenblicklichen Zeile und dem Ende der zuvor gedruckten Zeile mißt, einen Speicher (6), der die Beziehung zwischen der Breite eines einem thermischen Element zugeführten Impulses und der Heizdauer zwischen der augenblicklichen Zeile und der zuvor gedruckten Zeile speichert, einen Vergleicher (5) zum Vergleichen des Ausgangssignals der Druckdauermeßeinheit (4) mit dem Ausgangssignal des Speichers (6), mehrere Flip-Flops $(8_1—8_{32})$, die durch das Ausgangssignal des Vergleichers (5) setzbar und durch das Ausgangssignal des zweiten digitalen Speichers (10) zurücksetzbar sind, und eine UND-Schaltung $(11_1—11_{32})$ zur Bildung der logischen Verknüpfung des Ausgangssignals des Flip-Flops mit einem Taktgeberimpuls zur Bildung des Auslösezeitimpulses aufweisen.

3. Vorrichtung nach Anspruch 2, dadurch gekennzeichnet, daß die vorbestimmte Anzahl der zuvor gedruckten Zeilen, die in dem zweiten digitalen Speicher (10) gespeichert ist, sieben Zeilen beträgt.

4. Vorrichtung nach Anspruch 1, dadurch gekennzeichnet, daß der zweite digitale Speicher (10) die Dauer zwischen dem augenblicklichen Zeitpunkt und dem Zeitpunkt speichert, in dem der vorherige letzte schwarz Punkt durch ein bestimmtes thermisches Element gedruckt wurde; daß der Inhalt des zweiten digitalen Speichers jedesmal revidiert wird, wenn eine neue Zeile gedruckt wird, und zwar durch Löschen des Inhalts zu Null bei Punkten, die schwarz gedruckt werden, und durch Addieren des Inhalts zu der Zeit, die zum Drucken der augenblicklichen Zeile bei weiß gedruckten Punkten erforderlich ist; und daß die Umsetzmittel eine Umsetztabelle in Form eines Festwertspeichers (34), der die Beziehung zwischen dem zuvor gedruckten schwarzen Punkt, der in dem zweiten digitalen Speicher gespeichert ist, und der erforderlichen Impulsbreite für einen einem thermischen Element zugeführten Energie-Impuls speichert, einen Zähler (35) zur Bildung von Taktimpulsen, einen Vergleicher (36) zum Vergleichen des Ausgangssignals der Umsetztabelle mit dem Ausgangssignal des Zählers (35) und Mittel $(11_1—11_{32}, 39)$ zum Verteilen des Ausgangssignals des Vergleichers auf die thermischen Elemente zur Bildung eines Auslösezeitimpulses aufweisen.

5. Vorrichtung nach Anspruch 4, dadurch gekennzeichnet, daß der zweite digitale Speicher (10) nur dann Daten speichert, wenn die Druckdauer kürzer als 10 ms ist, und den Wert 10 ms speichert, wenn die Druckdauer länger als 10 ms ist.

6. Vorrichtung nach Anspruch 4 oder Anspruch 5, dadurch gekennzeichnet, daß die Umsetztabelle (51) das Ausgangssignal des Zählers (35) umsetzt; und daß der Vergleicher (36) das Ausgangssignal des zweiten digitalen Speichers (21) mit dem Ausgangssignal der Umsetztabelle vergleicht.

**0018762**

*Fig. 1*

Fig. 2

Fig. 3

# Fig. 4

# Fig. 5

# Fig. 6A

# Fig. 6B